(19) Europäisches Patentamt
European Patent Office
Office européen des brevets

(11) **EP 3 181 410 A1**

(12) **EUROPEAN PATENT APPLICATION**

(43) Date of publication:
**21.06.2017 Bulletin 2017/25**

(51) Int Cl.:
**B60R 21/015** (2006.01)   **B60R 22/48** (2006.01)

(21) Application number: **15199745.9**

(22) Date of filing: **14.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Autoliv Development AB**
**447 83 Vårgårda (SE)**

(72) Inventor: **MARINESCU, Alexandru**
**305500 Lugoj (RO)**

(74) Representative: **Kransell & Wennborg KB**
**P.O. Box 27834**
**115 93 Stockholm (SE)**

(54) **DEVICE CONFIGURED TO DETECT BUCKLE OF A SAFETY BELT IN A VEHICLE AND TO DETECT A PASSENGER LOCATED IN A SEAT ASSOCIATED WITH THE SAFETY BELT**

(57)   The invention relates to a device (10) configured to detect buckle of a safety belt (2) in a vehicle and to detect a passenger located in a seat (1) associated with the safety belt (2).

The device (10) comprises a belt buckle detector (9) configured to give rise to a first current flowing through the belt buckle detector (9) upon detecting that the belt (2) is not buckled, and a second current upon detecting that the belt (2) is buckled, and a passenger detector (4) configured to give rise to a current flowing through the passenger detector (4) upon detecting that a passenger is located in the seat (1), which passenger detector (4) is coupled in parallel with the belt buckle detector (9). The device (10) further comprises a current detector (6) configured to detect a current in a common energy supply path (5) of the belt buckle detector (9) and the passenger detector (4), which detected current is analysed to determine whether the safety belt (2) is buckled and a passenger is located in the seat (1).

Figure 2b

**Description**

**TECHNICAL FIELD**

The invention relates to a device configured to detect buckle of a safety belt in a vehicle and to detect a passenger located in a seat associated with the safety belt.

**BACKGROUND**

In order to comply with safety requirements in modern vehicles, such as cars, trucks, buses, etc., safety systems in the vehicles are required to be capable of detecting whether a passenger is located on a seat of the vehicle and whether the passenger has buckled her safety belt. If not, an alert should be provided such that the passenger is reminded to buckle her belt. If a belt is unbuckled and no passenger is located on the seat, no alert should be provided.

In the art, such detection has been performed by using two different detectors; one belt buckle detector and one detector for determining whether the passenger indeed is located on the seat. This results in a four-wire design, where two wires of the belt buckle detector and two wires of the passenger detector is connected to corresponding terminals of a so called Electronic Control Unit (ECU) of the vehicle arranged to perform the actual detection. Hence, a great number of terminals must be reserved on the ECU for performing the detection, in particular on a bus or a minibus, where each seat should be equipped with the two detectors.

US 8,282,163 discloses such detectors including a first sensing mechanism to detect and output a first signal indicating whether a seat belt device is configured in one of two positions, a first unbuckled position and a second buckled position, an electronic control unit coupled to a vehicle voltage source, having at least one input connection and at least one output connection, and being configured to process data received through any input connection, and further a second sensing mechanism to determine whether the seat is configured in one of two positions, a first unoccupied position and a second occupied position.

**SUMMARY**

An object of the present invention is to solve, or at least mitigate, this problem in the art and to provide an improved device configured to detect buckle of a safety belt in a vehicle and to detect a passenger located in a seat associated with the safety belt, using less terminals on, e.g., an ECU of the vehicle for performing the detection.

This object is attained in an aspect of the invention by a device configured to detect buckle of a safety belt in a vehicle and to detect a passenger located in a seat associated with the safety belt. The device comprises a belt buckle detector configured to give rise to a first current flowing through the belt buckle detector upon detecting that the belt is not buckled, and a second current upon detecting that the belt is buckled, and a passenger detector configured to give rise to a current flowing through the passenger detector upon detecting that a passenger is located in the seat, which passenger detector is coupled in parallel with the belt buckle detector. The device further comprises a current detector configured to detect a current in a common energy supply path of the belt buckle detector and the passenger detector, which detected current is analysed to determine whether the safety belt is buckled and a passenger is located in the seat.

The device according to the invention is thus arranged to detect three different states:

1) Unbuckled seat belt and no passenger detected (causing a first current to flow in the common energy supply path);

2) Unbuckled seat belt and passenger detected (causing a second current to flow in the common energy supply path); and

3) Buckled seat belt and passenger detected or not (causing a third current to flow in the common energy supply path).

An advantage of the device according to an embodiment of the invention as compared to the prior art is that only one terminal is required on a control device such as an ECU, an Airbag Control Module, ACM, or a Restrain Control Module, RCM, in order to supply the belt buckle detector and the passenger detector with the required energy, the control device further embodying the current detector by measuring the current supplied via the common energy supply path. Hence, the control unit advantageously uses the energy supply path both for supplying the required energy and to measure the currents which the different states give rise to.

Further advantageous is that this reduces cabling, and thus cost, of providing combined belt buckle/passenger detection in a vehicle. Further, a smaller ECU/ACM/RCM connector can advantageously be used.

In a first embodiment, if the current in the common energy supply path is detected to be at a predetermined first level, the belt is determined to be unbuckled and no passenger is located in the seat.

2

In a second embodiment, if the current in the common energy supply path is detected to be at a predetermined second level, the belt is determined to be unbuckled and a passenger is located in the seat, the second level exceeding the first level.

In a third embodiment, if the current in the common energy supply path is detected to be at a predetermined third level, the belt is determined to be buckled, the third level exceeding the second level.

In a further embodiment, the belt buckle detector is embodied by a Hall effect sensor. This is advantageous since a Hall effect sensor is inexpensive, reliable and resistant to wear.

In still a further embodiment, the belt buckle detector comprises a switch coupled with a resistor net, i.e. a so called resistor coded switch.

In one embodiment of a resistor coded switch, the belt buckle detector comprises a switch, a first resistor and a second resistor, the switch being connected in series with the first resistor, the switch and the first resistor further being connected in parallel with the second resistor, the switch being closed when the belt is buckled.

In another embodiment of a resistor coded switch, the belt buckle detector comprises a switch, a first resistor and a second resistor, the switch being connected in parallel with the first resistor, the switch and the first resistor further being connected in series with the second resistor, the switch being closed when the belt is buckled.

In a further embodiment, the passenger detector comprises a switch and a resistor, wherein the switch is connected in series with the resistor, the switch being closed when a passenger is located in the seat.

In still an embodiment, a common return path of the belt buckle detector and the passenger detector is connected to a ground point of any one of the ECU, the ACM or the RCM, whichever is used as a control unit. Advantageously, a low noise ground can be provided.

In still another embodiment, a common return path of the belt buckle detector and the passenger detector is connected to a ground point of the vehicle. Advantageously, this will free up a terminal of the ECA/ACM/RCM, thereby providing for a single terminal solution as previously discussed.

In yet another embodiment of the invention, the belt buckle detector is arranged in a buckle of the seat, thereby saving space in the vehicle.

In a further embodiment, the belt buckle detector is arranged in an additional connector device.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

Figure 1a shows a seat arranged in a vehicle in which the invention can be implemented;

Figure 1b shows the seat of Figure 1a but where parts of the invention are arranged in an external connector;

Figure 2a shows a device of detecting buckle of a safety belt and a passenger present on a seat in a vehicle according to an embodiment of the invention;

Figure 2b shows a device of detecting buckle of a safety belt and a passenger present on a seat in a vehicle according to another embodiment of the invention;

Figures 3a-c illustrates detection using the device of Figure 2 according to embodiments of the invention;

Figure 4 illustrates a first embodiment where a belt buckle detector comprises a switch coupled with a resistor net according to an embodiment of the invention; and

Figure 5 illustrates a second embodiment where a belt buckle detector comprises a switch coupled with a resistor net according to an embodiment of the invention.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

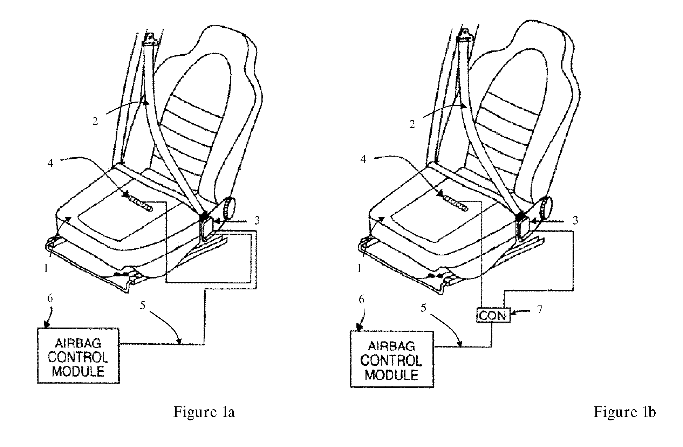

Figures 1a and 1b shows a seat 1 arranged in a vehicle such as a car, a bus, a truck or the like, in which the invention can be implemented. Figures 1a and 1b show a safety belt 2 buckled, i.e. locked, in a buckle 3.

In an embodiment of the invention, the seat 1 comprises a passenger detector 4, e.g. in the form of a weight-sensitive switch closing when a sufficiently weighty object is located in the seat 1. The passenger detector 4 is coupled in parallel with a belt buckle detector (not shown) located in the buckle 3 for detecting whether the safety belt 2 is buckled or not.

A common energy supply path 5 of the passenger detector and the belt buckle detector operates as energy feed to the two detectors from e.g. an Airbag Control Module 6 (ACM), Electronic Control Unit (ECU), Restrain Control Module (RCM), etc., of the vehicle. As will be described in the following, the current provided in the common supply path 5 is measured by the ACM/ECU/RCU 6 and analysed to determine whether the safety belt 2 is buckled or not and whether the passenger detector 4 detects a passenger in the seat 1.

With reference to Figure 1b, the belt buckle detector and any parts of the passenger detector (other than the weight-sensitive switch) may be arranged in an additional connector device 7, to which the common supply path 5 is provided from the ACM 6.

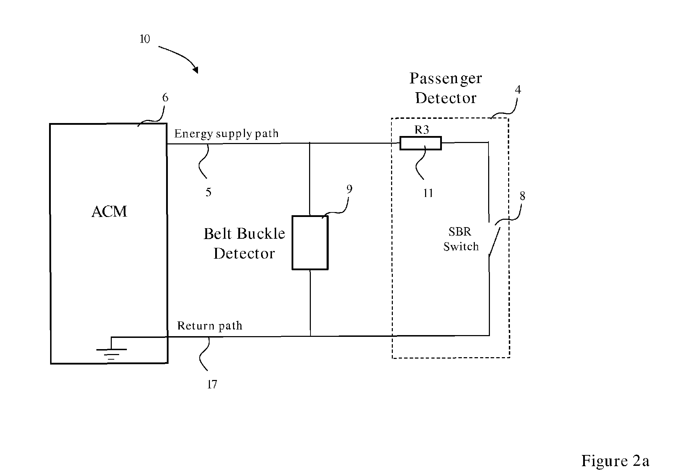

Figure 2a shows a device 10 of detecting buckle of a safety belt and a passenger present on a seat in a vehicle according to an embodiment of the invention. As can be seen, it is illustrated that the ACN 6 of the vehicle energizes circuitry of device 10 via the common energy feed path 5.

The device 10 comprises a belt buckle detector 9 configured to generate a first current upon detecting that the belt is not buckled, and a second current upon detecting that the belt is buckled. In an embodiment of the invention, the belt buckle detector 9 is embodied in the form of a Hall effect sensor having the advantage that it will give rise to a first current upon detecting a first state ("not buckled"), and a second current upon detecting a second state ("buckled"). Such a sensor is highly resistant to wear.

Further, the device 10 comprises a passenger detector 4 coupled in parallel with the belt buckle detector 9 and configured to generate a current upon detecting that a passenger is located in a seat with which the belt buckle detection is associated. In this particular embodiment, the passenger detector 4 comprises a switch 8, referred to as a Seat Belt Reminder (SBR) switch, connected in series with a resistor 11 being denoted R3.

As shown in Figure 2a, a common return path 17 of the belt buckle detector 9 and the passenger detector 4 is in an embodiment connected to a ground point of the ACM 6. This may be advantageous in case a low level of ground noise is desired.

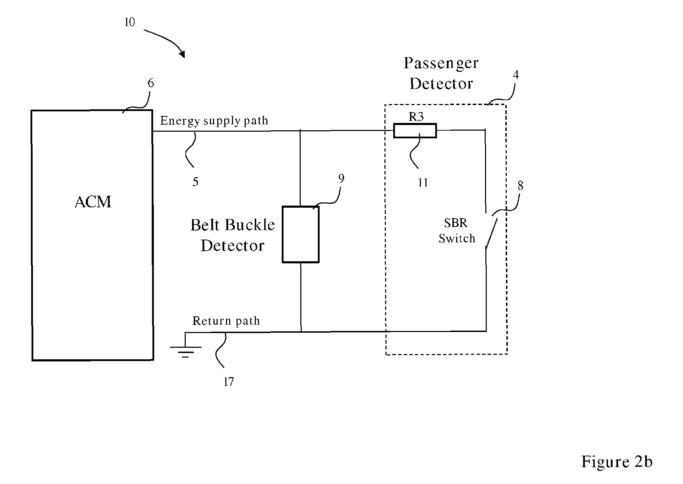

As shown in Figure 2b, a common return path 17 of the belt buckle detector 9 and the passenger detector 4 is in an embodiment connected to a ground point of the vehicle ACM 6, located for instance under the seat. This is advantageous since a single terminal is used on the ACM 6 for connecting to the two detectors 4, 9.

In the following Figures, the common return path is illustrated to be connected to a ground point of the vehicle.

The device 10 is arranged to detect three different states:

4) Unbuckled seat belt and no passenger detected (i.e. SBR switch open);

5) Unbuckled seat belt and passenger detected (i.e. SBR switch closed); and

6) Buckled seat belt and passenger detected or not (i.e. SBR switch open or closed).

An advantage of the device 10 according to embodiments of the invention as compared to the prior art is that only one terminal is required on the ACM 6 in order to detect whether the belt is buckled and whether a passenger is present on the seat or not (two terminals in case ACM ground is employed for the common return path 17). For instance, assuming that the device 10 is implemented in a 14-seat mini bus; 14 terminals will be required in contrast to 56 in the art, where the belt buckle detections is separated from the passenger detection, and each detector uses two terminals.

Further advantageous is that this reduces cabling, and thus cost, of providing combined belt buckle/passenger detection in a vehicle. Further, a smaller ACM connector can advantageously be used.

The states listed in the above are detected by detecting current flowing in the common energy supply path 5 to the belt buckle detector 9 and the passenger detector 4. The detected current flowing in the common energy supply path 5 is subsequently analysed to determine whether the safety belt is buckled and a passenger is considered to be located on the seat.

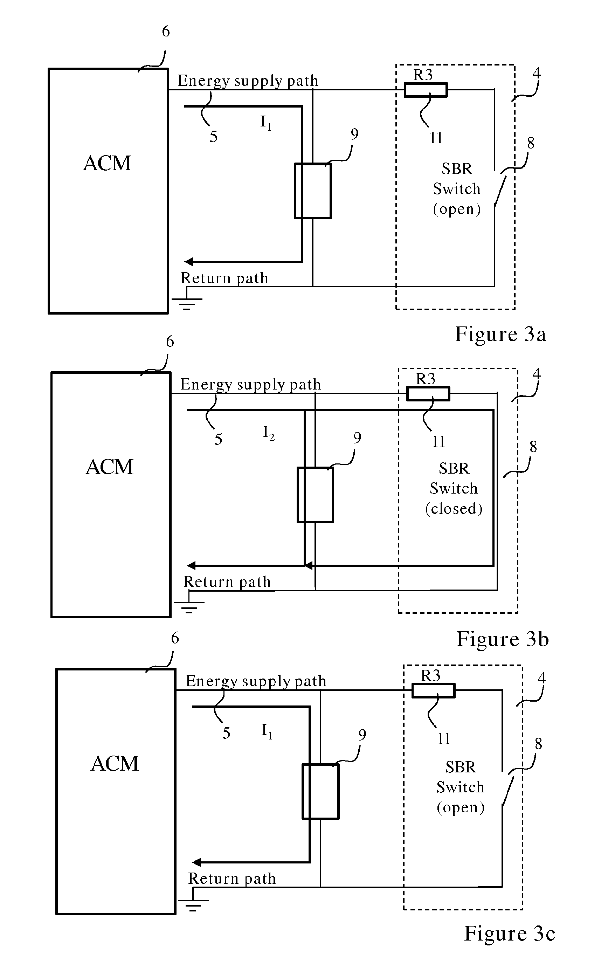

Now, with reference to Figure 3a, in which embodiment the belt buckle detector 9 is a Hall effect sensor, when state 1 is detected, the seat belt is unbuckled and only a small current $I_1$ will flow trough the Hall effect sensor 9, while no current will flow through the open SBR switch 8. In this state, there is not need to alert the driver and/or passenger that the belt is not buckled, since there is no passenger present.

With reference to Figure 3b, when state 2 is detected, the seat belt is unbuckled and the SBR switch 8 is closed. If impedance of the Hall effect sensor 9 equals that of resistor $R_3$, a current amounting to $I_1$ will flow trough the Hall effect sensor 9, as well as through the SBR switch 8, resulting in a current $I_2$ in the common energy supply path 5 being twice that of $I_1$. In this state, an alert should be provided indicating that the belt should be buckled immediately since there indeed is a passenger present.

With reference to Figure 3c, when state 3 is detected, the seat belt is buckled and a current being four-five times that of $I_1$ will flow trough the Hall effect sensor 9, while no current will flow through the SBR switch 8 in case it is open, and slightly more in case the SBR switch 8 is closed. In this state, there is not need to alert the driver and/or passenger that the belt is not buckled, since there is no passenger present.

As will be described in the following, the belt buckle detector 9 may be embodied by a switch coupled with a resistor net such that a first current can be generated when the switch is open and a second current when the switch is closed. This is commonly referred to as a resistor coded switch.

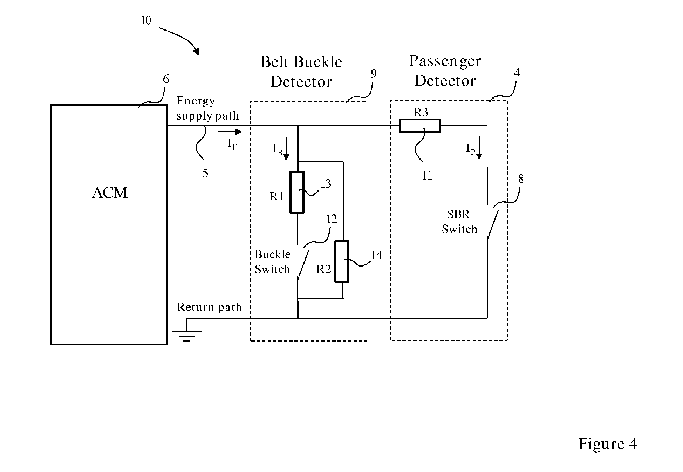

Figure 4 illustrates a first embodiment where the belt buckle detector 9 comprises a switch, coupled with a resistor net R1, R2. Thus, the buckle switch 12 is connected in series with a first resistor R1, and the serially coupled switch 12 and the first resistor R1 is further being connected in parallel with a second resistor R2,

Now assuming that in a practical example, the energy feed, i.e. voltage U delivered by the ACM 6 is U = 6.5 V, and that R1 = 351 $\Omega$, R2 = 1950 $\Omega$ and R3 = 1000 $\Omega$.

In the previously discussed state 1, where the seat belt is unbuckled and no passenger is detected (i.e. both the buckle switch 12 and the SBR switch 8 is open), the current $I_B$ flowing through the belt buckle detector 9 amounts to:

$$I_B = \frac{U}{R2} = \frac{6.5}{1950} = 3.33\, mA.$$

Thus, the current flowing in the energy supply path 5 in state 1 amounts to $I_F$ = 3.33 mA.

In state 2, where the seat belt is unbuckled and a passenger is detected (i.e. the buckle switch 12 is open while the SBR switch 8 is closed), the current $I_B$ flowing through the belt buckle detector 9 again amounts to 3.33 mA while the current $I_P$ flowing through the passenger detector amounts to:

$$I_P = \frac{U}{R3} = \frac{6.5}{1000} = 6.50\, mA.$$

The resulting current $I_R$ flowing in the supply path 5 in state 2 thus amounts to

$$I_F = I_B + I_P = 6.50 + 3.33 = 9.83\, mA.$$

Finally in state 3, where the seat belt is buckled and a) passenger detected and b) passenger not detected, the current $I_B$ flowing through the belt buckle detector 9 amounts to, R1 and R2 being in parallel:

$$I_B = \frac{U}{\left(\frac{R1\,x\,R2}{R1+R2}\right)} = \frac{6.5}{\frac{351\,x\,1950}{351+1950}} = 21.9\, mA.$$

In case a) a passenger is detected, $I_P$ = 6.50 mA will be generated (SBR switch 8 closed) by the passenger detector 4, and in case b) no passenger is detected, the current flowing trough the passenger detector 4 is zero.

Hence, as can be concluded in state 3, if the current $I_F$ flowing in the energy supply path 5 is equal to or above 21.9, the seat belt is buckled, which is the case up unto a current level $I_F$ = 21.9 + 6.5 = 28.4 mA. If the current $I_F$ exceeds that value (with some margin due to tolerances and/or slight variations), it can be concluded that a short must have occurred.

In state 3, the belt is buckled, and there is no need to determine whether a passenger is present or not, since no safety belt alert will be provided.

Table 1 summarizes the different states:

Table 1. Energy supply path current for detected states.

| Supply path current, $I_F$ (mA) | State | |
|---|---|---|
| $I_{MAX}$ | Short circuit | |
| -28.4 | Buckled, passenger detected | State 3 |
| 21.9- | Buckled, no passenger detected | |
| 9.84- | Not buckled, no passenger detected | State 2 |
| 3.33- | Not buckled, no passenger detected | State 1 |
| 0.00 | Open circuit | |

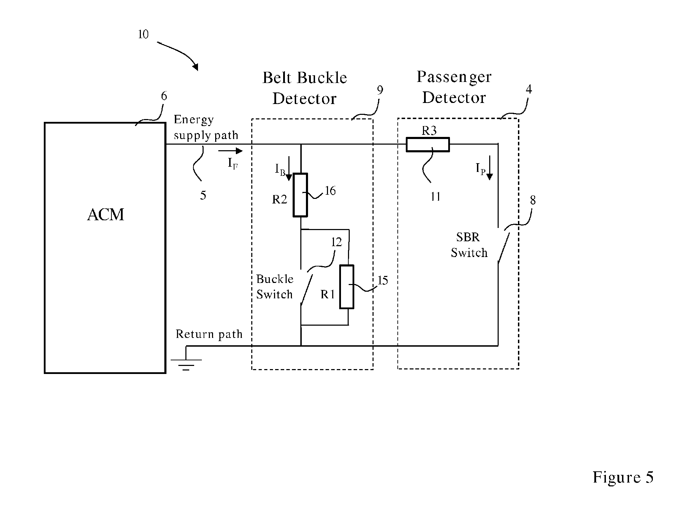

Figure 5 illustrates a second embodiment where the belt buckle detector 9 again comprises a switch coupled with a resistor net R1, R2. In this embodiment, the buckle switch 12 is connected in parallel with a first resistor R1, the switch 12 and the first resistor R1 further being connected in series with a second resistor R2

Again assuming that in a practical example, the energy feed, i.e. voltage U delivered by the ACM 6 is U = 6.5 V, and that R1 = 1520 Ω, R2 = 430 Ω and R3 = 1000 Ω.

In state 1, where the seat belt is unbuckled and no passenger is detected (i.e. both the buckle switch 12 and the SBR switch 8 is open), the current $I_B$ flowing trough the belt buckle detector 9 amounts to:

$$I_B = \frac{U}{R1+R2} = \frac{6.5}{1950} = 3.33 \, mA.$$

Thus, the current flowing in the supply path 5 in state 1 amounts to $I_R$ = 3.33 mA.

In state 2, where the seat belt is unbuckled and a passenger is detected (i.e. the buckle switch 12 is open while the SBR switch 8 is closed), the current $I_B$ flowing through the belt buckle detector 9 again amounts to 3.33 mA while the current $I_P$ flowing trough the passenger detector amounts to:

$$I_P = \frac{U}{R3} = \frac{6.5}{1000} = 6.50 \, mA.$$

The resulting current $I_F$ flowing in the energy supply path 5 in state 2 thus amounts to

$$I_R = I_B + I_P = 6.50 + 3.33 = 9.83 \, mA.$$

Finally in state 3, where the seat belt is buckled and a) passenger detected and b) passenger not detected, the current $I_B$ flowing trough the belt buckle detector 9 amounts to, R2 being short cut:

$$I_B = \frac{U}{R2} = \frac{6.5}{430} = 15.1 \, mA.$$

In case a) a passenger is detected, $I_P$ = 6.50 mA will be generated (SBR switch 8 closed) by the passenger detector 4, and in case b) no passenger is detected, the current flowing through by the passenger detector 4 is zero.

Hence, in this particular embodiment, as can be concluded in state 3, if the current $I_F$ flowing in the supply path 5 is equal to or above 15.1, the seat belt is buckled, which is the case up unto $I_F$ = 15.1 + 6.5 = 21.6 mA. If the current $I_F$ exceeds that value (with some margin due to tolerances), it can be concluded that a short must have occurred.

Table 2 summarizes the different states:

Table 2. Energy supply path current for detected states.

| Supply path current, $I_F$ (mA) | State | |
|---|---|---|
| $I_{MAX}$ | Short circuit | |
| -21.6 | Buckled, passenger detected | State 3 |

(continued)

| Supply path current, $I_F$ (mA) | State | |
|---|---|---|
| $I_{MAX}$ | Short circuit | |
| 15.1- | Buckled, no passenger detected | |
| 9.84- | Not buckled, no passenger detected | State 2 |
| 3.33- | Not buckled, no passenger detected | State 1 |
| 0.00 | Open circuit | |

Hence, as can be seen, the device 10 according to embodiments of the invention can advantageously detect whether the safety belt is buckled or not, and whether a passenger is detected to be located on the seat where the buckling is detected. Further advantageous is that as compared to the prior art, this can be undertaken by using a single terminal, the single terminal being used for energizing the detectors, and for detecting a resulting current.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. Device (10) configured to detect buckle of a safety belt (2) in a vehicle and to detect a passenger located in a seat (1) associated with the safety belt (2), comprising:

   a belt buckle detector (9) configured to give rise to a first current flowing through the belt buckle detector (9) upon detecting that the belt (2) is not buckled, and a second current upon detecting that the belt (2) is buckled; and a passenger detector (4) configured to give rise to a current flowing through the passenger detector (4) upon detecting that a passenger is located in the seat (1), said passenger detector (4) being coupled in parallel with the belt buckle detector (9); and a current detector (6) configured to detect a current in a common energy supply path (5) of the belt buckle detector (9) and the passenger detector (4), said detected current being analysed to determine whether the safety belt (2) is buckled and a passenger is located in the seat (1).

2. The device (10) of claim 1, wherein if the current in the common energy supply path (5) is detected to be at a predetermined first level, the belt (2) is determined to be unbuckled and no passenger is located in the seat (1).

3. The device (10) of claims 1 or 2, wherein if the current in the common energy supply path (5) is detected to be at a predetermined second level, the belt (2) is determined to be unbuckled and a passenger is located in the seat (1), the second level exceeding the first level.

4. The device (10) of any one of claims 1-3, wherein if the current in the common energy supply path (5) is detected to be at a predetermined third level, the belt (2) is determined to be buckled, the third level exceeding the second level.

5. The device (10) of any one of the preceding claims, the belt buckle detector (9) comprising:

   a Hall effect sensor.

6. The device (10) of any one of the preceding claims, the belt buckle detector (9) comprising:

   a switch (12) coupled with a resistor net.

7. The device (10) of claim 6, the belt buckle detector (9) comprising:

   a switch (12);
   a first resistor (13); and
   a second resistor (14), the switch (12) being connected in series with the first resistor (13), the switch (12) and the first resistor (13) further being connected in parallel with the second resistor (14), the switch (12) being closed when the belt (2) is buckled.

8. The device (10) of claim 6, the belt buckle detector (9) comprising:

a switch (12);
a first resistor (15); and
a second resistor (16), the switch (12) being connected in parallel with the first resistor (15), the switch (12) and the first resistor (15) further being connected in series with the second resistor (16), the switch (12) being closed when the belt (2) is buckled.

9. The device (10) of any one of the preceding claims, the passenger detector (4) comprising:

a switch (8); and
a resistor (11), wherein the switch (8) is connected in series (11) with the resistor (11), the switch (11) being closed when a passenger is located in the seat (2).

10. The device (10) of any one of the preceding claims, the energy being supplied by a control device selected from the group comprising:

an Electronic Control Unit, ECU, an Airbag Control Module, ACM, or a Restrain Control Module, RCM, of the vehicle, the selected control device further acting as the current detector (6).

11. The device of claim 10, a common return path (17) of the belt buckle detector (9) and the passenger detector (4) being connected to a ground point of any one of the ECU, the ACM or the RCM.

12. The device of any one of claims 1-10, a common return path (17) of the belt buckle detector (9) and the passenger detector (4) being connected to a ground point of the vehicle.

13. The device (10) of any one of the preceding claims, the belt buckle detector (9) being arranged in a buckle (3) of the seat (1).

14. The device (10) of any one of claims 1-12, the belt buckle detector (9) being arranged in an additional connector device (7).

Figure 1a

Figure 1b

10

Passenger
Detector

6                                                                                    4

Energy supply path                                    R3

ACM                                                                      11

Belt Buckle                    9
Detector

SBR
Switch                    8

Return path

17

Figure 2a

10

6

Passenger
Detector

4

ACM

Energy supply path

5

R3

11

Belt Buckle
Detector

9

SBR
Switch

8

Return path

17

Figure 2b

Figure 3a

Figure 3b

Figure 3c

Figure 4

Figure 5

**EP 3 181 410 A1**

Europäisches
Patentamt

European
Patent Office

Office européen
des brevets

# EUROPEAN SEARCH REPORT

Application Number

EP 15 19 9745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/143508 A1 (SAITOH YUKIHIRO [JP] ET AL) 19 June 2008 (2008-06-19)<br>* paragraph [0023] *<br>* paragraph [0025] *<br>* paragraph [0037] - paragraph [0038] *<br>* paragraph [0044] *<br>* paragraph [0054] *<br>* paragraph [0057] *<br>* paragraph [0060] *<br>* paragraph [0068] *<br>* paragraph [0073] *<br>* paragraph [0077] - paragraph [0078] *<br>* claims 5,6 *<br>* figures 1-3 *<br>----- | 1-5,7-14 | INV.<br>B60R21/015<br>B60R22/48 |
| X | EP 1 767 407 A1 (IEE SARL [LU])<br>28 March 2007 (2007-03-28)<br>* paragraph [0008] *<br>* paragraph [0015] *<br>* claims 1-11 *<br>* figures *<br>----- | 1-14 | |

TECHNICAL FIELDS
SEARCHED (IPC)

B60R

The present search report has been drawn up for all claims

| Place of search | Date of completion of the search | Examiner |
|---|---|---|
| Berlin | 31 May 2016 | Granger, Hugo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 9745

This annex lists the patent family members relating to the patent documents cited in  the above-mentioned European search report.
The members are as contained in the European Patent Office EDP file on
The European Patent Office is in no way liable for these particulars which are merely given for the purpose of information.

31-05-2016

| Patent document cited in search report | Publication date | Patent family member(s) | Publication date |
|---|---|---|---|
| US 2008143508 A1 | 19-06-2008 | CN 101204942 A<br>DE 102007060000 A1<br>JP 4779957 B2<br>JP 2008151605 A<br>US 2008143508 A1 | 25-06-2008<br>26-06-2008<br>28-09-2011<br>03-07-2008<br>19-06-2008 |
| EP 1767407 A1 | 28-03-2007 | CN 101272936 A<br>EP 1767407 A1<br>EP 1937515 A1<br>JP 2009509829 A<br>US 2009030577 A1<br>WO 2007039520 A1 | 24-09-2008<br>28-03-2007<br>02-07-2008<br>12-03-2009<br>29-01-2009<br>12-04-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 8282163 B